# EUROPEAN PATENT APPLICATION

(11) **EP 4 183 692 A1**
(43) Date of publication of application: **24.05.2023**
(21) Application number: 22208633.2
(22) Date of filing: 21.11.2022
(51) Int. Cl.: B64F 1/22, B60D 1/167

(54) **NOSE LANDING GEAR ADJUSTMENT TOOL**

(30) Priority: 22.11.2021 US 202117456010
(71) Applicant: Gulfstream Aerospace Corporation, Savannah, Georgia 31402 (US)
(72) Inventor: LEONARD, Patrick, Savannah, 31402 (US); WRIGHT, Caleb, Savannah, 31402 (US); CROUCH, Adam, Savannah, 31402 (US); WATERS, Spencer, Savannah, 31402 (US); CRAGO, James, Savannah, 31402 (US)
(74) Representative: LKGlobal UK Ltd.

(57) **Abstract**

A tool for adjusting an orientation of a nose landing gear of an aircraft is disclosed herein. The nose landing gear has an axle to which a wheel is mounted. The axle has an opening extending therethrough. The opening is defined by an inner surface of the axle. The tool includes, but is not limited to, a unitary member having a handle portion at a first end of the unitary member and an axle-engaging portion at a second end of the unitary member. The handle portion is configured for engagement with a hand of an operator. The axle-engaging portion is configured to be inserted into the opening and to engage with the inner surface.

## Description

### TECHNICAL FIELD

The present invention relates generally to an aircraft, and more particularly relates to a tool for adjusting the angular orientation of the nose landing gear of an aircraft.

### BACKGROUND

After an aircraft has landed and taxied to a gate, after all passengers and crew have disembarked, and after all scheduled flights for the day have been completed, the aircraft is shut down. Sometime thereafter, the aircraft is usually towed to another location at the airport or maintenance facility to await the return of the crew for the next mission.

Prior to towing the aircraft, the nose landing gear torque link (referred to hereinafter as the "scissors link") is disconnected. The scissors link couples the nose landing gear to the nose landing gear steering column. This coupling permits the aircraft to be steered from the flight deck during taxiing. If the scissors link remains coupled to the nose landing when the aircraft is towed, then there is a possibility that the scissors link will be damaged. This is undesirable. For this reason, the ground crew disconnects the scissors link prior to towing the aircraft.

The challenge arises when it is time to reconnect the scissors link to the nose landing gear. To reconnect the scissors link, the nose landing gear must be properly aligned with the scissors link. However, after towing, the nose landing gear is rarely, if ever, left in an angular orientation that is properly aligned with the scissors link. To bring the nose landing gear back into proper angular alignment with the scissors link requires that the nose landing gear to be rotated.

Rotating the nose landing gear is a difficult and arduous task. Currently, there are no tools that are configured to assist a flight crew member with the rotation of the nose landing gear. Accordingly, flight crew members must rotate the nose landing gear by physically applying torque directly to the nose landing gear tires or by applying torque to the taxi lights or to other components that attached to the nose landing gear and/or the steering column. These methods of applying torque to the nose landing gear are undesirable because they can damage the various components that are attached to the nose landing gear and/or steering column. Further, because of the close contact that a flight crew member must have with the tires of the nose landing gear when reorienting the nose landing gear, there is a high likelihood that the flight crew member will soil or damage his or her uniform.

Accordingly, it is desirable to provide a tool that facilitates the ability of a single flight crew member to independently adjust the angular orientation of the nose landing gear of an aircraft without causing the undesirable consequences outlined above. Furthermore, other desirable features and characteristics will become apparent from the subsequent summary and detailed description and the appended claims, taken in conjunction with the accompanying drawings and the foregoing technical field and background.

### BRIEF SUMMARY

A nose landing gear adjustment tool for use with the nose landing gear of an aircraft is disclosed herein. The nose landing gear has a wheel having an axle. The axle has an opening extending therethrough. The opening is defined by an inner surface of the axle.

In a first non-limiting embodiment, the tool includes, but is not limited to, a unitary member having a handle portion at a first end of the unitary member and an axle-engaging portion at a second end of the unitary member. The handle portion is configured for engagement with a hand of an operator. The axle-engaging portion is configured to be inserted into the opening and to engage with the inner surface.

In another non-limiting embodiment, the tool includes, but is not limited to, a handle portion configured for engagement with a hand of an operator. The tool further includes, but is not limited to, an axle-engaging portion that is distinct from the handle portion, the axle-engaging portion being coupled with the handle portion. The axle-engaging portion is configured to be inserted into the opening and to engage with the inner surface. The axle-engaging portion and the handle portion are configured for adjustment with respect to one another.

### BRIEF DESCRIPTION OF THE DRAWINGS

The present invention will hereinafter be described in conjunction with the following drawing figures, wherein like numerals denote like elements, and
FIG. 1 is a fragmented perspective view illustrating a nose portion of an aircraft fuselage and the nose landing gear of the aircraft in a lowered or deployed state;
FIG. 2 is an expanded, fragmented perspective view illustrating the nose landing gear of FIG. 1;
FIG. 3 is a perspective view illustrating a non-limiting embodiment of tool made in accordance with the teachings of the present disclosure;
FIG. 4 is a fragmented, overhead schematic view illustrating the tool of FIG. 3 prior to insertion into an axle of the nose landing gear of FIG. 2;
FIG. 5 is a fragmented, overhead schematic view illustrating the tool of FIG. 4 subsequent to its insertion into the axle of the nose landing gear of FIG. 4;
FIG. 6 is a perspective view illustrating an alternate non-limiting embodiment of a tool made in accordance with the teachings of the present disclosure;
FIG. 7 is a perspective view illustrating a handle portion of the tool of FIG. 6;
FIG. 8 is an expanded perspective view illustrating a portion of the handle of FIG. 7;
FIG. 9 is an expanded perspective view illustrating another portion of the handle of FIG. 7;
FIG. 10 is a perspective view illustrating an axle-engaging portion of the tool of FIG. 6;
FIG. 11 is a perspective view illustrating the axle-engaging portion of FIG. 10 from a different perspective;
FIG. 12 is a perspective view illustrating a spring-loaded pin compatible for use with both the handle portion of FIG. 7 and the axle-engaging portion of FIG. 10;
FIG. 13 is a perspective view illustrating the tool of FIG. 6 arranged in an alternate configuration; and
FIG. 14 is a perspective view illustrating the tool of FIG. 13 from a different perspective.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

A tool for facilitating the adjustment of an angular orientation of an aircraft nose landing gear is disclosed herein. In a non-limiting embodiment, the nose landing gear includes an axle about which one or more wheels are mounted. The axle extends through the wheel(s) and the wheel(s) rotates about the axis. The axle is a cylindrical tube having an opening that extends entirely through the longitudinal axis of the axle from one end of the axle to the opposite end. Accordingly, the axle has an inner diameter and an outer diameter. The wheel(s) is mounted to an outer surface comprising the axle's outer diameter and the opening is defined by the inner surface comprising the axle's inner diameter.

In a non-limiting embodiment, the tool has an axle-engaging portion and a handle. The axle engaging portion is configured for clearance-fit engagement with the axle's inner surface. Such a clearance-fit configuration permits the axle-engaging portion to be inserted into the opening of the axle. Once the axle-engaging portion is seated within the opening of the axle and engaged with the inner surface of the inner diameter of the axle, an operator, such as a flight crew member or a ground crew member, can push or pull on the handle portion of the tool in a direction that is parallel to the ground surface that the nose landing gear is resting on. The application of the pushing or pulling force on the handle will exert a torque on the nose landing gear through the axle. This torque, in turn, will cause the nose landing gear to rotate about the steering column. In this manner, the angular orientation of the nose landing gear can be adjusted, the nose landing gear can be brought into alignment with the scissors link, and the scissors link can be re-coupled with the nose landing gear.

A greater understanding of the nose landing gear adjustment tool discussed above may be obtained through a review of the illustrations accompanying this application together with a review of the detailed description that follows.

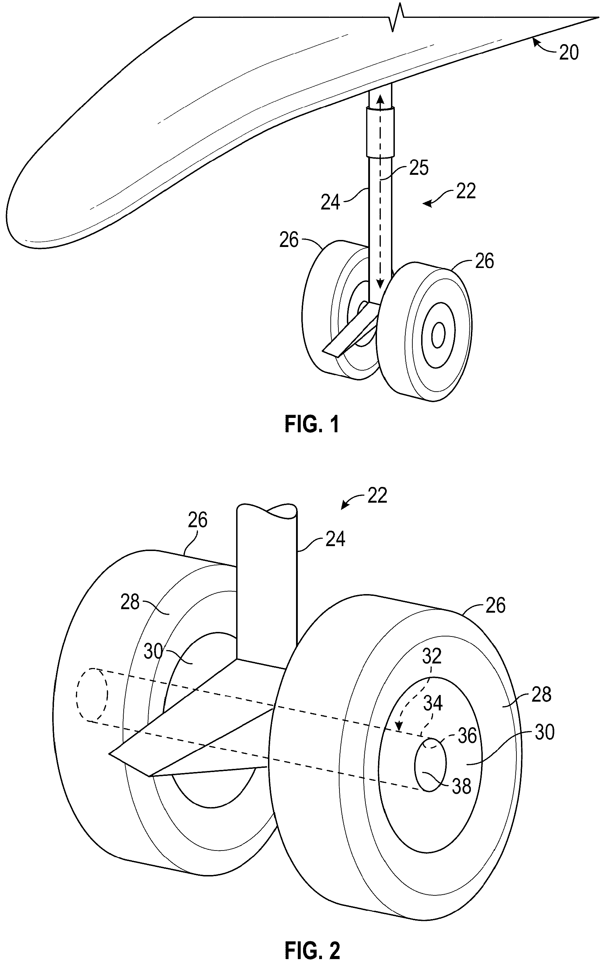

FIG. 1 is a fragmented perspective view illustrating a portion of an aircraft 20. In particular, a nose portion of a fuselage of aircraft 20 is illustrated in FIG. 1. Aircraft 20 is situated on a ground surface such as a runway or a taxiway. A nose landing gear 22 of aircraft 20 is illustrated in a deployed state. When deployed while aircraft 20 is situated on the ground surface, nose landing gear 22 supports the weight of a forward portion of aircraft 20. When aircraft 20 is on the ground and nose landing gear 22 is deployed, aircraft 20 can be taxied from a runway to a gate, from a gate to a runway, from one gate to another gate, or between any other desired locations. When taxiing, the flight crew controls the angular orientation (*i.e.,* the compass heading) of nose landing gear 22 from a flight deck of aircraft 20. By providing steering inputs through a yoke or through an inceptor, a steering column 24 of nose landing gear 22 can be rotated. Steering column 24 extends vertically along a vertical axis 25 between aircraft 20, at one end, and wheels 26, at an opposite end. The rotation of steering column 24 about vertical axis 25 will change the angular orientation of wheels 26, thereby causing a change in a direction that wheels 26 are facing. This, in turn, will cause a change in the direction that aircraft 20 will move in when taxied. In this manner, the flight crew is able to steer aircraft 20 when aircraft 20 is taxied on a ground surface.

With continuing reference to FIG. 1, FIG. 2 is an expanded, fragmented, perspective view of nose landing gear 22. As illustrated in FIG. 2, wheels 26 each comprise a tire 28 and a rim 30. Each rim 30 has a generally donut-shaped configuration having an outer periphery and an inner periphery. Each tire 28 is mounted to the outer periphery of each rim 30. The inner periphery of each rim 30 us used to couple each wheel 26 to nose landing gear 22.

As best seen in FIG. 2, an axle 32 is illustrated in phantom lines. Axle 32 comprises an elongated cylindrical tube having an outer surface 34 defining an outer diameter of axle 32. Axle 32 further has an inner surface 36 defining an inner diameter of axle 32. In the illustrated embodiment, axle 32 extends through a lower portion of steering column 24 such that a portion of axle 32 protrudes out of opposite sides of steering column 24.

In the illustrated embodiment, the inner periphery of each rim 30 is fitted over and around outer surface 34 of the portions of axle 32 that protrude out of opposite ends of steering column 24. Wheels 26 are coupled with axle 32 in a manner that permits rotating engagement between these components. In some embodiments, wheels 26 may include ball bearings or other mechanisms configured to facilitate the rolling engagement between wheels 26 and axle 32. When wheels 26 are mounted to axle 32, axle 32 extends entirely through the inner periphery of each rim 30. In some non-limiting embodiments, axle 32 may protrude out beyond a lateral end of each rim 30. In this manner, an opening 38 to an interior of axle 32 is accessible from outboard portions of each wheel 26.

With continuing reference to FIGS. 1-2, FIG. 3 is a perspective view illustrating a non-limiting embodiment of a tool 40 for adjusting the angular orientation of nose landing gear 22. Tool 40 can permit a flight crew member, a ground crew member or any other person to singlehandedly rotate nose landing gear 22 about vertical axis 25 while aircraft 20 is stationary. Advantageously, tool 40 may have a weight and a length that permits tool 40 to be easily stowed onboard aircraft 20 and carried with aircraft 20 at times so that it is available for use by flight crew members at all destinations.

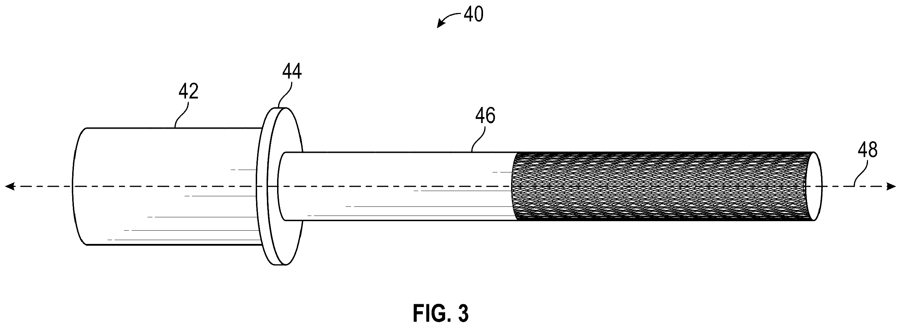

In the non-limiting embodiment illustrated in FIG. 3, tool 40 includes an axle-engaging portion 42, a collar 44, and a handle portion 46. In other embodiments, tool 40 may include a greater or lesser number of components and/or features without departing from the teachings of the present disclosure. For example, and without limitation, tool 40 may omit collar 44 and/or tool 40 may further include a polymeric grip disposed around all, or a portion of, handle portion 46.

In the illustrated embodiment, axle-engaging portion 42 has a cylindrical configuration that is dimensioned to fit within opening 38 of axle 32 and is further configured to engage with inner surface 36 in a clearance-fit manner. In a non-limiting embodiment, when axle-engaging portion 42 is seated within opening 38, an external surface of axle-engaging portion 42 may have a relatively small clearance with respect to inner surface 36. For example, and without limitation, there may be a clearance fit between the inner diameter of axle 32 (i.e., inner surface 36) and the outer diameter of axle engaging portion 42 of 0.010 inches with a tolerance that falls within a range of plus or minus 0.005 inches. In other examples, axle-engaging portion 42 may be dimensioned to have a tighter or looser clearance fit without departing from the teachings of the present disclosure.

It should be understood that although axle-engaging portion 42 has been illustrated as having a cylindrical configuration, other configurations may also be employed. In other words, any suitable configuration that provides for a clearance-fit engagement between axle engaging portion 42 and inner surface 36 and that is further effective to deliver torque from handle portion 46 to axle 32 would fall within the teachings of the present disclosure. For example, and without limitation, in an alternate non-limiting embodiment, axle-engaging portion 42 may be configured as a tube having a hollow core rather than as a cylinder having a solid core. Other geometric shapes may also be employed without deviating from the teachings of the present disclosure.

In the illustrated embodiment, collar 44 extends transversely outward from a longitudinal end of axle-engaging portion 42 and from a longitudinal end of handle portion 46. Said another way, collar 42 is disposed at a location where axle-engaging portion 42 and handle portion 46 meet. Collar 44 extends outward from axle-engaging portion 42 in a direction that is orthogonal to a longitudinal axis 48 of tool 40. In the illustrated embodiment, collar 44 extends outward beyond an outer periphery of axle engaging portion 42 and beyond an outer periphery of handle portion 46. Configured in this manner, collar 42 serves as a hard-stop that will obstruct tool 40 from being inserted into opening 38 of axle 32 beyond the longitudinal length of axle-engaging portion 42. Collar 44 will further serve as a barrier between axle 32 and the hands of an operator gripping handle portion 46. In this manner, collar 44 can facilitate the ability of an operator of tool 48 to maintain cleanliness by inhibiting physical contact between the operator's hands and axle 32.

In the illustrated embodiment, collar 44 extends circumferentially around the entire periphery of tool 40. It should be understood that in other embodiment, collar 44 may extend only partially around the circumference of tool 40 without departing from the teachings of the present disclosure. In still other embodiments, collar 44 may simply comprise a body projecting transversely outwardly from axle-engaging portion 42 rather than comprising a flange that extends in the circumferential direction about a circumference of tool 40. Any other configuration for collar 44 that is effective to serve as a hard-stop for insertion of axle-engaging portion 42 into opening 38 may also be employed without departing from the teachings of the present disclosure. As set forth above, in still other embodiments, collar 44 may be omitted entirely without departing from the teachings of the present disclosure.

The longitudinal length of axle-engaging portion 42 is determined by its natural terminus at a first longitudinal end of tool 40 and by the location of collar 44 which is spaced apart from the natural terminus by a predetermined distance. In some embodiments, the longitudinal position of collar 44 along axle-engaging portion 42 may coincide with the depth to which it is desirable to insert tool 40 into opening 38 of axle 32.

In the illustrated embodiment, handle 46 extends longitudinally in a direction away from axle-engaging portion 42 by a predetermined length. In an exemplary embodiment, handle 46 may have a length ranging from eighteen inches to three feet.

As illustrated, a majority of the longitudinal length of tool 40 is comprised of handle portion 46. This configuration advantageously provides an amount of leverage to an operator that is effective to facilitate the application of torque to axle 32. The protracted length of handle 46 provides a favorable mechanical advantage to an operator attempting to adjust the angular orientation of nose landing gear 22. This configuration permits a single operator to adjust the angular orientation of nose landing gear 22 without assistance from other operators.

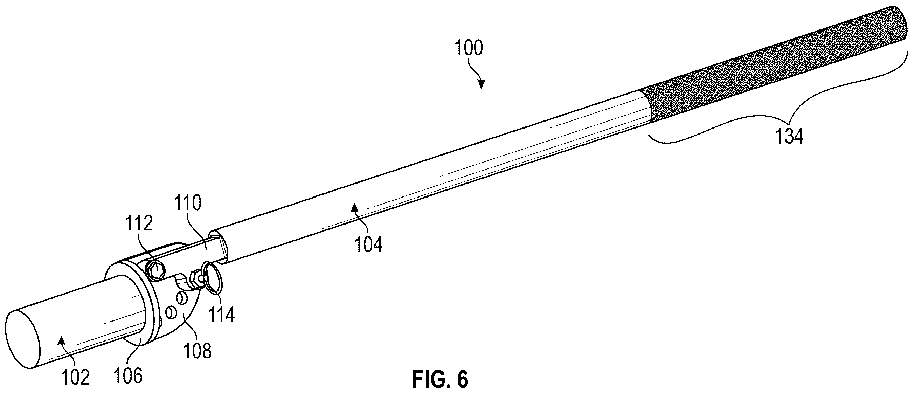

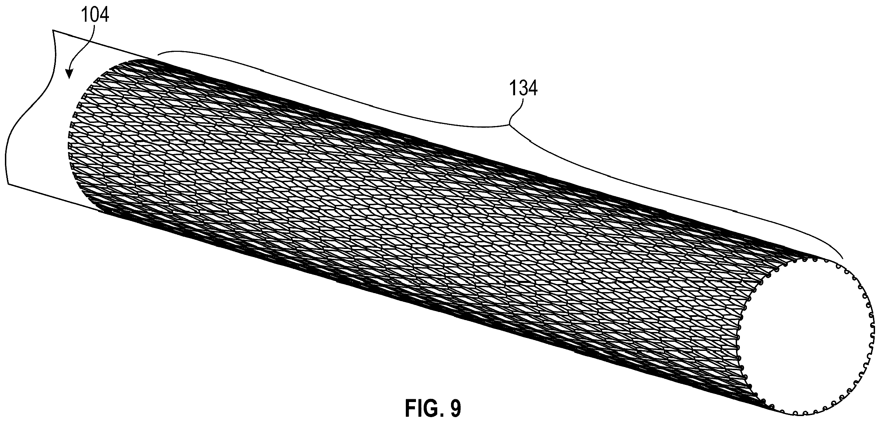

In the illustrated embodiment, handle portion 46 has a diameter that is smaller than a diameter of axle-engaging portion 42. This small diameter enhances the ability of an operator to maintain his or her grip on handle portion 46 when applying torque to axle 32. To further facilitate an operator's ability to maintain his or her grip on handle portion 46, in the illustrated embodiment, a portion of handle portion 46 has been given a grip-enhancing texture (see FIGS. 6 and 9, reference numeral 134). In some embodiments, a process known to those of ordinary skill in the art as "knurling" is applied to handle portion 46. By this process, a series of geometric shapes are etched into, machined into, or otherwise defined in handle portion 46. These geometric shapes impart a texture to the surface. The presence of this texture enhances an operator's ability to maintain a grip on handle portion 46.

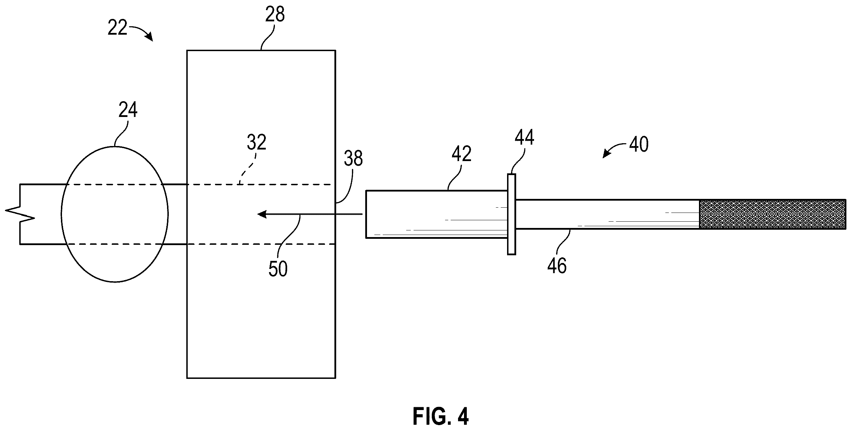

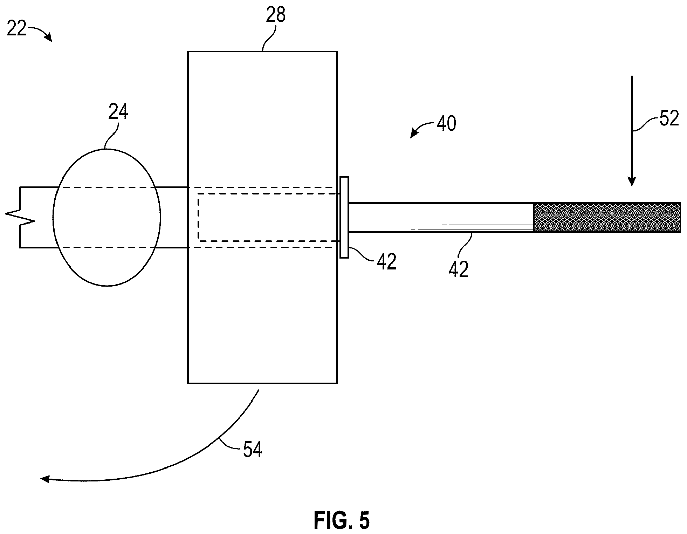

With continuing reference to FIGS 1-3, FIGS. 4 and 5 are schematic, overhead views illustrating how tool 40 can be used to adjust the angular orientation of nose landing gear 22. In a typical operation, an operator would approach nose landing gear 22 with tool 40 in hand and insert axle-engaging portion 42 in the direction indicated by arrow 50 into opening 38 of axle 32, as best shown in FIG. 4. The operator will continue to insert axle-engaging portion 42 into opening 38 until collar 44 is seated against the axial end of axle 32, as best shown in FIG. 5.

With tool 40 seated within axle 32, the operator may then selectively apply a pushing force or a pulling force on handle portion 46 in a direction indicated by arrow 52, such force being applied in a direction that is generally parallel to the ground surface on which nose landing gear 22 is resting. If sufficient, this force will apply a torque to nose landing gear 22 of a magnitude that is sufficient to overcome that counteracting force of friction between tires 28 and the ground surface, causing nose landing gear 22 to rotate in the direction indicated by arrow 54. The operator will rotate nose landing gear 22 about steering column 24 until a pin (not shown) that is configured to couple the scissors link (not shown) with nose landing gear 22 comes into alignment with the nose landing gear. Once the pin has been properly aligned, it can be moved into a locked position, thereby coupling nose landing gear 22 with the scissors link. Once that has occurred, the ability to steer the nose landing gear from the flight deck of the aircraft is restored.

In the embodiment illustrated in FIGS. 3-5, tool 40 comprises a single, unitary structure. When constructing such a unitary embodiment, tool 40 may start out as a single metal blank that is subsequently machined, for example, in a CNC machine (Computer Numerically Controlled machine) which imparts the features, surfaces, shapes, and dimensions illustrated in FIGS. 3 - 5. In other embodiments, axle-engaging portion 42, collar 44, and handle portion 46 may be machined separately and then assembled together. In such embodiments, these components may be coupled with one another in any suitable manner that is effective to permit tool 40 to deliver an amount of torque to nose landing gear 22 that is sufficient to permit nose landing gear 22 to rotate about vertical axis 25. In one non-limiting embodiment, the separate portions of tool 40 may be coupled with one another through a welding process. In another non-limiting example, the separate components may be coupled with one another through the use of mechanical fasteners. In yet another non-limiting example, the separate components may coupled with one another via threaded engagement. In embodiments where the separate components are coupled together in a detachable manner, such as through the use of mechanical fasteners or through threaded engagement, handle portion 46 may be coupled with one of multiple axle-engaging portions 42 of varying sizes and dimensions. In this manner, tool 40 may be adapted to accommodate different aircraft having differently dimensioned axles 32 having differently sized openings 38.

Tool 40 may comprise any suitable material having the strength and resilience effective to deliver a torque to nose landing gear 22 that is sufficient to cause nose landing gear 22 to rotate about vertical axis 25. For example, and without limitation, tool 40 may be constructed from a metal material including, but not limited to, aluminum, iron or steel. In other embodiments, tool 40 may be constructed from a wooden material. In still other embodiments, tool 40 may be constructed from a plastic material. In still other embodiments, tool 40 may be constructed with a carbon fiber composite material. Other types of materials may also be employed without deviating from the teachings of the present disclosure.

With continuing reference to FIGS. 1-5, FIGS. 6 through 14 depict a second embodiment of a tool 100 suitable for adjusting the angular orientation of nose landing gear 22. Tool 100 comprises an axle-engaging portion 102, a handle portion 104, a collar 106, a fastener 112 and a spring-loaded pin 114. In this embodiment, axle-engaging portion 102 includes an adjustment flange 108, and handle portion 104 includes an adjustment extension 110. Axle-engaging portion 102 and handle portion 104 are assembled together and configured in a manner that is similar to axle-engaging portion 42 and handle portion 46. Accordingly, for the sake of brevity, the remainder of this detailed description will focus on the differences between the two embodiments rather on than the features that they have in common. Accordingly, if the detailed description below is silent regarding a feature, aspect, or characteristic of either axle-engaging portion 102 or handle portion 104, the reader should conclude that such feature, aspect, or characteristic is identical to what has been described above with respect to tool 40.

The primary difference between tool 40 and tool 100 is that tool 40 does not include any means by which the angular orientation of axle-engaging portion 42 may be adjusted with respect to handle portion 46. Rather, with respect to tool 40, these components are rigidly and un-adjustably fixed with respect to one another. By contrast, tool 100 does include a means for making adjustments (for example and without limitation angular adjustments) between axle-engaging portion 102 and handle portion 104. To permit such adjustments, the embodiment of tool 100 illustrated in FIGS. 6 through 14 includes an axle-engaging portion 102 that is separate and distinct from the handle portion 104. These two components are adapted to have their angular orientation with respect to one another adjusted. This adaptation consists of adjustment flange 108, adjustment extension 110, fastener 112, and spring-loaded pin 114. The interplay between these components will be discussed in greater detail below. It should be understood that in other embodiments, other types of adjustment may be made. For example, and without limitation, in addition to (or instead of) being able to adjust the angular orientation of axle-engaging portion 102 with respect to handle portion 104, the axial length of tool 100 may be adjustable by moving axle-engaging portion 102 closer to, or further from, the distant end of handle portion 104. Other types of adjustments of the components may also be introduced without departing from the teachings of the present disclosure.

With respect to FIG. 6, tool 100 is illustrated with all of the individual components of tool 100 arranged in a fully assembled state. Axle-engaging portion 102 is aligned with handle portion 104 such that the angle between the two components is approximately one hundred and eighty degrees. Aligned in this manner, tool 100 is configured substantially the same as tool 40.

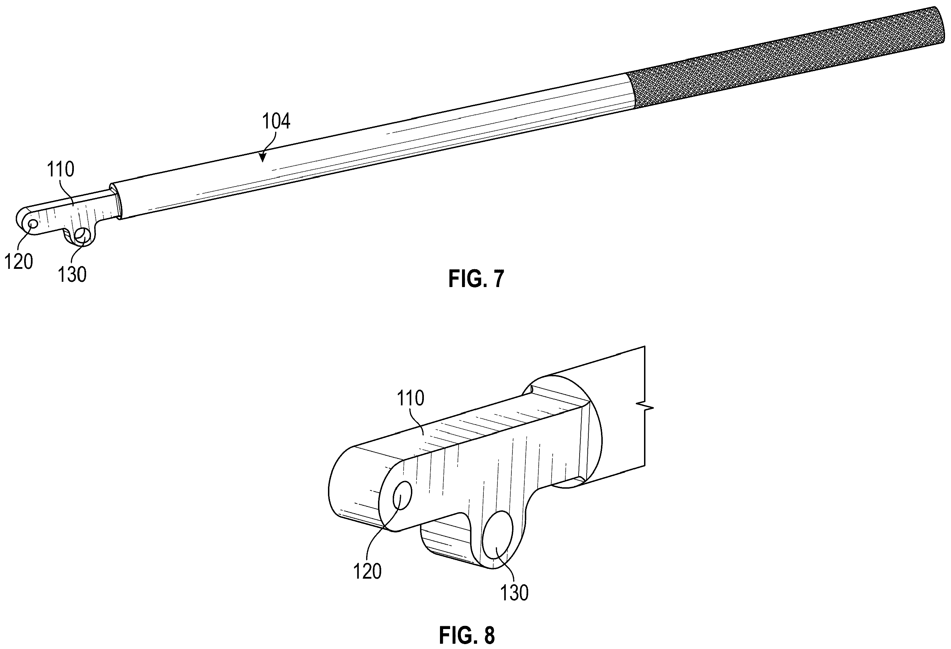

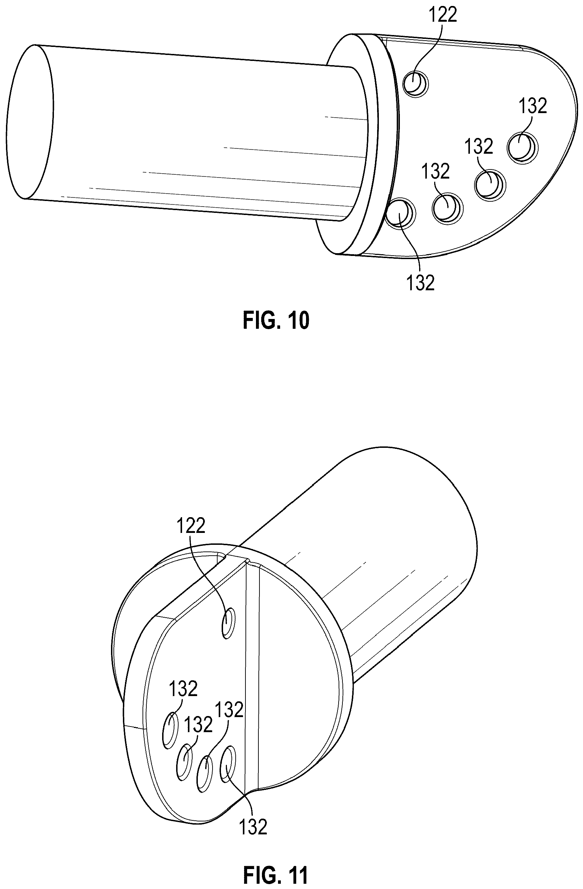

Handle portion 104 and axle-engaging portion 102 are pivotably coupled to one another by fastener 112. In the illustrated embodiment, fastener 112 comprises a conventional nut and bolt fastener. As best seen in FIGS. 7 and 8, adjustment extension 110 includes a pivot opening 120 extending through adjustment extension 110. As best seen in FIGS. 10 and 11, adjustment flange 108 includes a pivot opening 122 extending through adjustment flange 108. To facilitate pivotal movement of axle-engaging portion 102 with respect to handle portion 104, handle portion 104 and axle-engaging portion 102 are disposed with pivot opening 120 and pivot opening 122 in axial alignment. The bolt of fastener 112 extends through pivot opening 120 and further through pivot opening 122 and the nut of fastener 112 fastens to the bolt of fastener 112. Arranged in this manner, handle portion 104 and axle-engaging portion 102 are able to pivot freely with respect to one another.

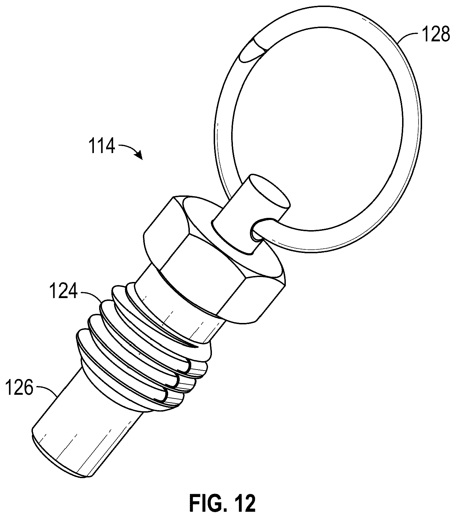

To control the pivotal movement of axle-engaging portion 102 with respect to handle portion 104, spring loaded pin 114 is employed. Spring loaded pin 114 is best seen in FIG. 12. Spring loaded pin 114 includes a stationary portion 124, a pin portion 126, and a ring portion 128. Stationary portion 124 is configured for threaded engagement with a pin opening 130 in adjustment extension 110. Pin portion 126 is axially aligned with stationary portion 124 and is configured to slide longitudinally with respect to stationary portion 124 along their shared longitudinal axis. Pin portion 126 is configured for clearance engagement with a plurality of pin openings 132 in adjustment flange 108. As best seen in FIGS. 11 and 12, plurality of pin openings 132 are arranged along an arc such that each pin opening 132 is an equal distance from pivot opening 122. A spring (not shown) biases pin portion 126 in a downward direction with respect to stationary portion 124 (downward when viewed from the perspective of FIG. 12), causing it to protrude from a bottom of stationary portion 124. When ring portion 128 is pulled in an upward direction (upward when viewed from the perspective of FIG. 12), the biasing force of the spring is overcome and pin portion 126 retracts within stationary portion 124.

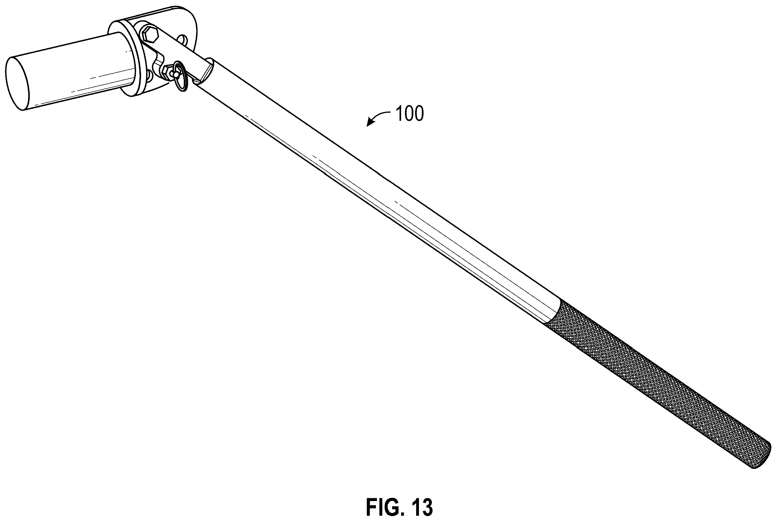

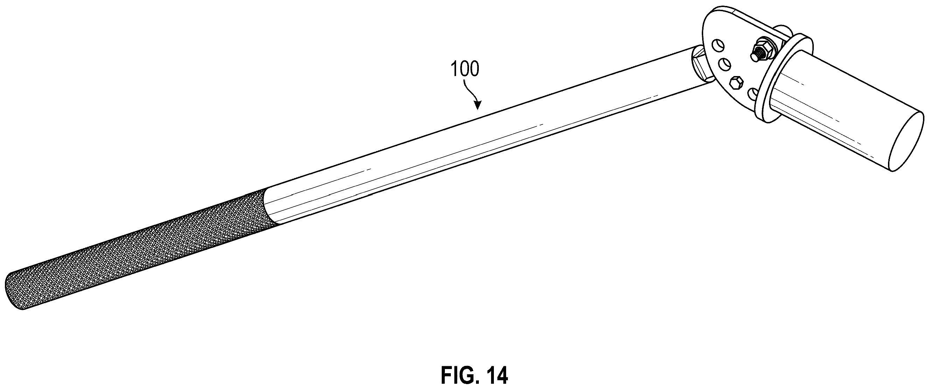

When stationary portion 124 is threaded into pin opening 130 in adjustment extension 120 and when handle portion 104 is pivoted with respect to axle-engaging portion 102 about fastener 112 such that any pin opening 132 of plurality of pin openings 132 comes into alignment with pin opening 130 in adjustment extension 110, the spring will cause pin portion 126 to protrude out of the bottom of stationary portion 124 and through the aligned pin opening 132. When pin portion 126 extends through the aligned pin opening 132, further pivotal movement of handle 104 is inhibited. By selectively pulling on ring portion 128 and contemporaneously pivoting handle portion 104 to a different angular orientation with respect to axle-engaging portion 102, and then releasing ring portion 128, the angular orientation of handle portion 104 can be locked into one of four different orientations with respect to axle-engaging portion 102. One such angular orientation is illustrated in FIGS. 13 and 14. In other embodiments a greater or lesser number of pin openings 132 may be employed. In such other embodiments, a correspondingly greater or smaller number of angular orientations between handle portion 104 and axle-engaging portion 102 may be obtained.

As illustrated in FIG. 6, handle portion 104 includes knurling to improve an operator's grip on handle 104. FIG. 9 provides an expanded view of handle portion 104. In FIG. 9, the details of the knurling are shown with greater clarity.

The ability to adjust the angular orientation of axle-engaging portion 102 with respect to handle portion 104 may permit greater accessibility to opening 38 in axle 32, depending upon the angular orientation of nose landing gear 22 after aircraft 20 has been towed. It should be understood that the adaptation described above that permits axle-engaging portion 102 to be adjusted with respect to handle portion 104 is merely one non-limiting embodiment. Any other adaptation that permit adjustment of the angular orientation of axle-engaging portion 102 with respect to handle portion 104 may alternatively be employed without departing from the teachings of the present disclosure.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the disclosure as set forth in the appended claims.

The present disclosure may be further described by the following Aspects.

**Aspect 1.** A tool for adjusting an orientation of a nose landing gear of an aircraft, the nose landing gear having an axle to which a wheel is mounted, the axle having an opening extending therethrough, and the opening being defined by an inner surface of the axle, the tool comprising:
a unitary member having a handle portion at a first end of the unitary member and an axle-engaging portion at a second end of the unitary member,
wherein the handle portion is configured for engagement with a hand of an operator, and wherein the axle-engaging portion is configured to be inserted into the opening and to engage with the inner surface.

**Aspect 2.** The tool of Aspect 1, wherein the axle-engaging portion includes a flange spaced apart from the second end by a predetermined distance, the flange protruding outward from the axle-engaging portion in a transverse direction, the flange configured to inhibit insertion of the axle-engaging portion into the opening beyond a length corresponding with the predetermined distance.

**Aspect 3**.The tool of Aspects 1 or 2, wherein the axle-engaging portion has a cylindrical configuration that is configured to yield a clearance-fit with respect to the inner surface.

**Aspect 4.** The tool of any one of Aspects 1-3, wherein the handle portion includes a grip-enhancing feature.

**Aspect 5.** The tool of Aspect 4, wherein the grip enhancing feature comprises a textured surface.

**Aspect 6.** The tool of any one of Aspects 1-5, wherein the unitary member comprises a metal material.

**Aspect 7.** The tool of Aspect 6, wherein the metal material comprises steel.

**Aspect 8.** A tool for adjusting an orientation of a nose landing gear of an aircraft, the nose landing gear having an axle to which a wheel is mounted, the axle having an opening extending therethrough, and the opening being defined by an inner surface of the axle, the tool comprising:
a handle portion configured for engagement with a hand of an operator; and
an axle-engaging portion that is distinct from the handle portion, the axle-engaging portion coupled with the handle portion, the axle-engaging portion being configured to be inserted into the opening and to engage with the inner surface,
wherein the axle-engaging portion and the handle portion are configured for adjustment with respect to one another.

**Aspect 9.** The tool of Aspect 8, wherein the axle-engaging portion includes a flange spaced apart from and end of the axle-engaging portion by a predetermined distance, the flange protruding outward from the axle-engaging portion in a transverse direction, the flange configured to inhibit insertion of the axle-engaging portion into the opening beyond a length corresponding with the predetermined distance.

**Aspect 10.** The tool of Aspects 8 or 9, wherein the axle-engaging portion has a cylindrical configuration that is configured to yield a clearance-fit with respect to the inner surface.

**Aspect 11.** The tool of any one of Aspects 8-10, wherein the handle portion includes a grip-enhancing feature.

**Aspect 12.** The tool of Aspect 11, wherein the grip enhancing feature comprises a textured surface.

**Aspect 13.** The tool of any one of Aspects 8-12, wherein the handle portion and the axle-engaging portion comprise a metal material.

**Aspect 14.** The tool of Aspect 13, wherein the metal material comprises steel.

**Aspect 15.** The tool of any one of Aspects 8-14, wherein the axle-engaging portion is coupled with the handle portion in a manner that permits an angular orientation of the axle-engaging portion with respect to the handle portion to be selectively adjusted.

**Aspect 16.** The tool of Aspect 15, wherein the axle-engaging portion includes an adjustment flange, wherein the handle portion includes an adjustment extension, and wherein the adjustment extension is configured to engage with the adjustment flange in a manner that permits adjustment of the angular orientation of the handle portion with respect to the axle-engaging portion.

**Aspect 17.** The tool of Aspect 16, the tool further comprising:
a first fastener; and
a second fastener,
wherein the adjustment flange includes a plurality of first adjustment holes extending therethrough and further includes a first attachment hole extending therethrough, each first adjustment hole of the plurality of first adjustment holes being disposed along an arc, and the first attachment hole being disposed at a focus of a circle defined by the arc,
wherein the adjustment extension includes a second attachment hole and a second adjustment hole,
wherein the first attachment hole and the second attachment hole are axially aligned, wherein the first fastener extends through the first adjustment hole and through the second adjustment hole to pivotably couple the adjustment extension to the adjustment flange, wherein the second adjustment hole is selectively aligned with one of the first adjustment holes, and
wherein the second fastener extends thorough the second adjustment hole and through the one of the first adjustment holes to secure an angular orientation of the adjustment extension with respect to the adjustment flange.

**Aspect 18.** The tool of Aspect 17, wherein the second fastener comprises a spring-loaded retractable pin.

**Aspect 19.** The tool of Aspects 17 or 18, wherein the adjustment extension includes a projecting portion, the projecting portion extending in a direction transverse to the adjustment extension, and wherein the second adjustment hole extends through the projecting portion.

**Aspect 20.** The tool of any one of Aspects 17-19, wherein the handle portion and the adjustment extension comprise a unitary member.

## Claims

1. A tool for adjusting an orientation of a nose landing gear of an aircraft, the nose landing gear having an axle to which a wheel is mounted, the axle having an opening extending therethrough, and the opening being defined by an inner surface of the axle, the tool comprising:
a unitary member having a handle portion at a first end of the unitary member and an axle-engaging portion at a second end of the unitary member,
wherein the handle portion is configured for engagement with a hand of an operator, and
wherein the axle-engaging portion is configured to be inserted into the opening and to engage with the inner surface.

2. The tool of claim 1, wherein the axle-engaging portion includes a flange spaced apart from the second end by a predetermined distance, the flange protruding outward from the axle-engaging portion in a transverse direction, the flange configured to inhibit insertion of the axle-engaging portion into the opening beyond a length corresponding with the predetermined distance.

3. The tool of claims 1 or 2, wherein the axle-engaging portion has a cylindrical configuration that is configured to yield a clearance-fit with respect to the inner surface.

4. The tool of any one of claims 1-3, wherein the handle portion includes a grip-enhancing feature, wherein the grip enhancing feature optionally comprises a textured surface.

5. The tool of any one of claims 1-4, wherein the unitary member comprises a metal material, wherein the metal material optionally comprises steel.

6. A tool for adjusting an orientation of a nose landing gear of an aircraft, the nose landing gear having an axle to which a wheel is mounted, the axle having an opening extending therethrough, and the opening being defined by an inner surface of the axle, the tool comprising:
a handle portion configured for engagement with a hand of an operator; and
an axle-engaging portion that is distinct from the handle portion, the axle-engaging portion coupled with the handle portion, the axle-engaging portion being configured to be inserted into the opening and to engage with the inner surface,
wherein the axle-engaging portion and the handle portion are configured for adjustment with respect to one another.

7. The tool of claim 6, wherein the axle-engaging portion includes a flange spaced apart from and end of the axle-engaging portion by a predetermined distance, the flange protruding outward from the axle-engaging portion in a transverse direction, the flange configured to inhibit insertion of the axle-engaging portion into the opening beyond a length corresponding with the predetermined distance.

8. The tool of claims 6 or 7, wherein the axle-engaging portion has a cylindrical configuration that is configured to yield a clearance-fit with respect to the inner surface.

9. The tool of any one of claims 6-8 , wherein the handle portion includes a grip-enhancing feature, wherein the grip enhancing feature optionally comprises a textured surface.

10. The tool of any one of claims 6-9, wherein the handle portion and the axle-engaging portion comprise a metal material, wherein the metal material optionally comprises steel.

11. The tool of any one of claims 6-10, wherein the axle-engaging portion is coupled with the handle portion in a manner that permits an angular orientation of the axle-engaging portion with respect to the handle portion to be selectively adjusted.

12. The tool of claim 11, wherein the axle-engaging portion includes an adjustment flange, wherein the handle portion includes an adjustment extension, and wherein the adjustment extension is configured to engage with the adjustment flange in a manner that permits adjustment of the angular orientation of the handle portion with respect to the axle-engaging portion.

13. The tool of claim 12, the tool further comprising:
a first fastener; and
a second fastener,
wherein the adjustment flange includes a plurality of first adjustment holes extending therethrough and further includes a first attachment hole extending therethrough, each first adjustment hole of the plurality of first adjustment holes being disposed along an arc, and the first attachment hole being disposed at a focus of a circle defined by the arc,
wherein the adjustment extension includes a second attachment hole and a second adjustment hole,
wherein the first attachment hole and the second attachment hole are axially aligned, wherein the first fastener extends through the first adjustment hole and through the second adjustment hole to pivotably couple the adjustment extension to the adjustment flange,
wherein the second adjustment hole is selectively aligned with one of the first adjustment holes, and
wherein the second fastener extends thorough the second adjustment hole and through the one of the first adjustment holes to secure an angular orientation of the adjustment extension with respect to the adjustment flange.

14. The tool of claim 13, wherein the second fastener comprises a spring-loaded retractable pin; and/or
wherein the adjustment extension includes a projecting portion, the projecting portion extending in a direction transverse to the adjustment extension, and wherein the second adjustment hole extends through the projecting portion; and/or
wherein the handle portion and the adjustment extension comprise a unitary member.
